# EUROPÄISCHE PATENTSCHRIFT

(11) **EP 1 323 356 B1**
(45) Veröffentlichungstag und Bekanntmachung des Hinweises auf die Patenterteilung: **15.03.2006**
(21) Anmeldenummer: 02028035.0
(22) Anmeldetag: 16.12.2002
(51) Int. Cl.: A23L 1/226

(54) **Verwendung von Ferulasäureamiden als Aromastoffe**
Use of ferulic amides as flavouring agents
Utilisation d'amides féruliques comme agents aromatisants

(30) Priorität: 27.12.2001 DE 10164263; 23.05.2002 DE 10222883
(43) Veröffentlichungstag der Anmeldung: 02.07.2003
(73) Patentinhaber: Symrise GmbH & Co. KG, 37603 Holzminden (DE)
(72) Erfinder: Ley, Jakob Peter, 37603 Holzminden (DE); Krammer, Gerhard, 37603 Holzminden (DE); Muche, Sylvia, 37603 Holzminden (DE); Kindel, Günter, 37671 Höxter (DE); Reiss, Ingo, 37603 Holzminden (DE)
(74) Vertreter: Eisenführ, Speiser & Partner

(56) Entgegenhaltungen:
- US-A- 1 329 272
- US-A- 6 117 365
- SHÔZÔ KOBAYASHI: "Beziehung zwischen chemischer Konstitution und scharfen Geschmack bei Säureamiden" CHEMISCHES ZENTRALBLATT, XX, XX, Bd. 99, Nr. I, 1928, Seiten 1028-1031, XP000925852
- PATENT ABSTRACTS OF JAPAN vol. 2000, no. 08, 6. Oktober 2000 (2000-10-06) & JP 2000 129257 A (NIPPON BEET SUGAR MFG CO LTD), 9. Mai 2000 (2000-05-09)
- JOSETTE MARTIN-TANGUY ET AL: "The distribution of hydroxycinnamic acid amides in flowering plants" PHYTOCHEMISTRY, PERGAMON PRESS, GB, Bd. 17, Nr. 11, 1978, Seiten 1927-1928, XP000925834 ISSN: 0031-9422

## Beschreibung

Die Erfindung betrifft die Verwendung von *N*-[2-(4-Hydroxy-3-methoxyphenyl)ethyl]-3-(4-hydroxy-3-methoxy-phenyl)-(2*E*)-propensäureamid bzw. *N*-[2-(4-Hydroxy-3-methoxyphenyl)ethyl]-3-(4-hydroxy-3-methoxy-phenyl)-(2*Z*)-propensäureamid (im Folgenden kurz Feruloylmethoxytyramine), *N*-[2-(4-Hydroxy-3-methoxyphenyl)ethyl]-3-(4-hydroxy-3-methoxy-phenyl)-propansäureamid (im Folgenden kurz Dihydroferuloylmethoxytyramin), *N*-[2-(3,4-Dihydroxyphenyl)ethyl]-3-(4-hydroxy-3-methoxy-phenyl)-(2*E*)-propensäureamid bzw. *N*-(2-(3,4-Dihydroxyphenyl)ethyl]-3-(4-hydroxy-3-methoxy-phenyl)-(2*Z*)-propensäureamid (im Folgenden kurz Feruloyldopamine), *N*-[2-(4-Hydroxyphenyl)ethyl]-3-(3,4-dihydroxyphenyl)-(2*E*)-propensäureamid bzw. *N*-[2-(4-Hydroxyphenyl)ethyl]-3-(3,4-dihydroxyphenyl)-(2*Z*)-propensäureamid (im Folgenden kurz Caffeoyltyramine) und *N*-[2-(3,4-Dimethoxyphenyl)ethyl]-3-(3,4-dimethoxyphenyl)-(2*E*)-propensäureamid bzw. *N*-[2-(3,4-dimethoxyphenyl)ethyl]-3-(3,4-dimethoxy-phenyl)-(2*Z*)-propensäureamid (im Folgenden kurz Rubenamine) als Aromastoffe, insbesondere als Scharfstoffe und Aromastoffe mit einem wärmeerzeugenden Effekt, in der Ernährung, der Mundhygiene oder dem Genuss dienenden Zubereitungen. Ferner betrifft die Erfindung der Ernährung, der Mundhygiene oder dem Genuss dienende Zubereitungen, enthaltend die erfindungsgemäßen Ferulasäureamide sowie Verfahren zur Herstellung der erfindungsgemäßen Zubereitungen.

Capsaicin [*N*-(4-Hydroxy-3-methoxybenzyl)-8-methyl-(6*E*)-nonensäureamid, vgl. Abbildung 1] und andere Capsaicinoide sind als scharf schmeckende und wärmeerzeugende Aromastoffe aus verschiedenen Capsicum-Arten, insbesondere Chili, schon seit 1871 bekannt. Bei entsprechend geringer Dosierung der Capsaicinoide (der Schwellenwert liegt bei einer Verdünnung von ca. 1:10⁵) wird nur eine angenehme, neutrale Schärfe und ein Wärmegefuhl im Mund wahrgenommen. Problematisch ist bei Capsaicin die hohe akute Toxizität (LD₅₀ (Maus oral) 47 mg), die die Anwendbarkeit bei der Zubereitung erschwert, sowie die bei häufiger Anwendung und Überdosierung auftretende chronischen Gastritis, Nieren- und Leberschädigung (Römpp Lexikon Naturstoffchemie, Thieme 1997, S. 109). Somit besteht trotz der guten sensorischen Eigenschaften ein Bedarf an weniger problematischen Scharfstoffen. Das im weißen Pfeffer vorkommende Piperin (1-Piperoylpiperidin, vgl. Abbildung 1) verursacht zwar auch einen starken scharfen Eindruck (Römpp Lexikon Naturstoffchemie, Thieme 1997, S. 500), zeigt aber im Vergleich zu Capsaicin eine relative Schärfe von nur ca. 1 %. Darüber hinaus besitzt Piperin einen intensiven Eigengeschmack der an Pfeffer erinnert, so dass die Anwendung in vielen Zubereitungen nur beschränkt erfolgen kann.

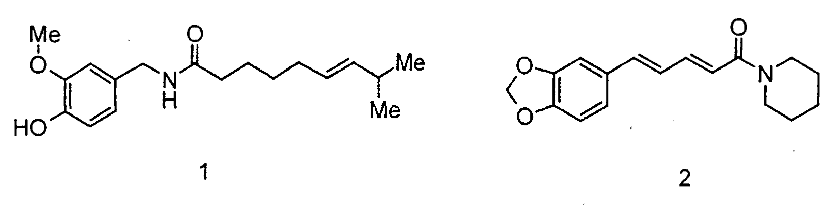

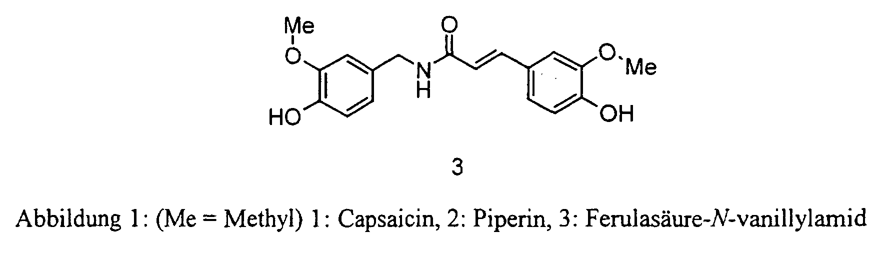

In der Literatur werden einige Scharfstoffe auf Basis des 4-Hydroxy-3-methoxybenzylamins (im Folgenden Vanillylamin) beschrieben. In *Chemical Products,* 1954, März, S. 102-106 wird eine ausführliche Liste evaluierter Stoffe angegeben. Darunter wird auch *N*-(4-Hydroxy-3-methoxybenzyl)-4-hydroxy-3-methoxy-(2*E*)-propensäureamid (Ferulasäure-N-vanillylamid, vergleiche Abbildung 1) angegeben, das aber im Gegensatz zu den Vanillylamiden langkettiger aliphatischer Säuren als nicht scharf beschrieben wird.

Aufgabe der vorliegenden Erfindung war es, Stoffe mit einem scharfen und wärmeerzeugenden Effekt sowie einem neutralen Aromaprofil zu finden, die in der Natur vorkommen und als Aromastoffe in der Ernährung, der Mundhygiene oder dem Genuss dienenden Zubereitungen verwendet werden können.

Die Erfindung betrifft daher die Verwendung von *N*-[2-(4-Hydroxy-3-methoxyphenyl)ethyl]-3-(4-hydroxy-3-methoxy-phenyl)-(2*E*)-propensäureamid (trans-Feruloylmethoxytyramin), *N*-[2-(4-Hydroxy-3-methoxyphenyl)ethyl]-3-(4-hydroxy-3-methoxy-phenyl)-(2*Z*)-propensäureamid (cis-Feruloylmethoxytyramin), *N*-[2-(4-Hydroxy-3-methoxyphenyl)ethyl]-3-(4-hydroxy-3-methoxy-phenyl)-propansäureamid (Dihydroferuloylmethoxytyramin), *N*-[2-(3,4-Dihydroxyphenyl)ethyl]-3-(4-hydroxy-3-methoxy-phenyl)-(2*E*)-propensäureamid (trans-Feruloyldopamin), *N*-[2-(3,4-Dihydroxyphenyl)ethyl]-3-(4-hydroxy-3-methoxy-phenyl)-(2*Z*)-propensäureamid (cis-Feruloyldopamin), *N*-[2-(4-Hydroxyphenyl)ethyl]-3-(3,4-dihydroxyphenyl)-(2*E*)-propensäureamid (trans-Caffeoyltyramin), *N*-[2-(4-Hydroxyphenyl)ethyl]-3-(3,4-dihydroxyphenyl)-(2*Z*)-propensäureamid (cis-Caffeoyltyramin), *N*-[2-(3,4-Dimethoxyphenyl)ethyl]-3-(3,4-dimethoxyphenyl)-(2*E*)-propensäureamid (trans-Rubenamin) und/oder *N*-[2-(3,4-dimethoxyphenyl)ethyl]-3-(3,4-dimethoxy-phenyl)-(2*Z*)-propensäureamid (cis-Rubenamin) als Aromastoffe, bevorzugt als Scharfstoffe und Aromastoffe mit einem wärmeerzeugenden Effekt, insbesondere bevorzugt als Scharfstoffe und Aromastoffe mit einem wärmeerzeugenden Effekt in der Ernährung, der Mundhygiene oder dem Genuss dienenden Zubereitungen.

Ein weiterer Gegenstand der vorliegenden Erfindung sind Zubereitungen, Halbfertigwaren und Riech-, Aroma- und Geschmackstoffkompositionen, enthaltend diese Verbindungen.

In der folgenden Abbildung 2 sind die Strukturen der erfindungsgemäßen Ferulasäureamide verdeutlicht:

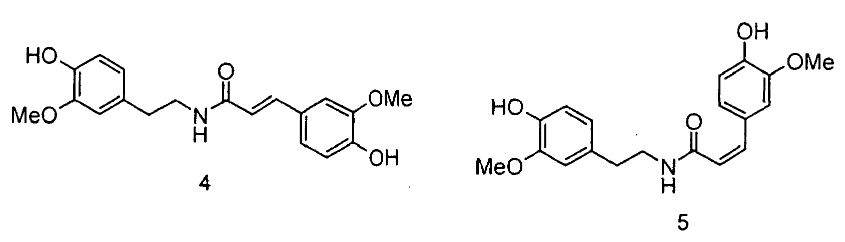

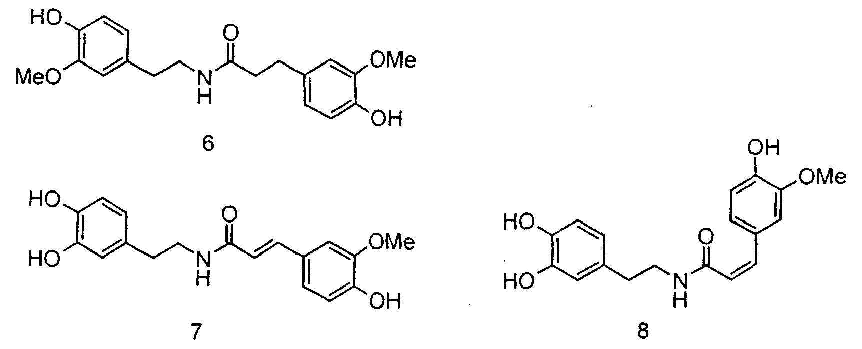

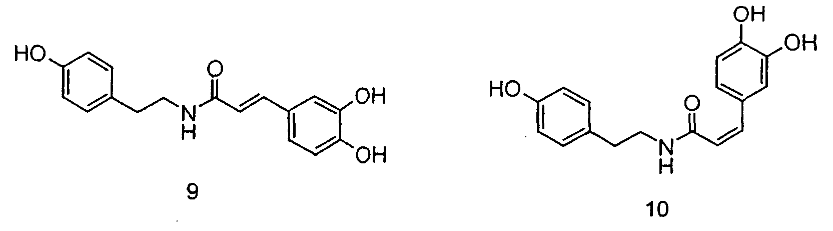

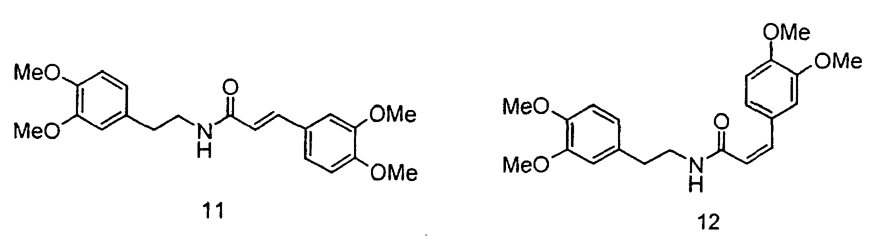

Abbildung 2: (Me = Methyl), 4: trans-Feruloylmethoxytyramin, 5: cis-Feruloylmethoxytyramin, 6: Dihydroferuloylmethoxytyramin, 7: trans-Feruloyldopamin, 8: cis-Feruloyldopamin, 9: trans-Caffeoyltyramin, 10: cis-Caffeoyltyramin, 11: trans-Rubenamin, 12: cis-Rubenamin

Trans-Feruloylmethoxytyramin (CAS-Nr. 78510-19-7) wurde z.B. schon in *Agric. Biol. Chem*., 1984, *48* (6), 1653-1654 als Inhaltsstoff von Zuckerrüben-Samen beschrieben. Laut *Nat. Med*., 1994, *48* (4), 304-306 wurde Feruloyldopamin in *Atraphaxis spinosa* L., var. sinaica Boiss gefunden. Cis-Feruloylmethoxytyramin (CAS-Nr. 219773-49-6) wurde in den Samen einer Zwiebel-Art *(Allium tuberosum)* entdeckt (Zhongcaoyao, 2000, *31* (4), S. 244 ff.; Chemical Abstract 2000, Bd. 133, 263831). In JP 2000 129,257 wird die Anwendung von *trans*-Feruloylmethoxytyramin und *trans*-Feruloyldopamin als Antioxidantien für therapeutische Anwendungen beschrieben. Trans-Caffeolytyramin wurde z.B. in Zwiebel-Arten gefunden (Biosci. Biotech. Biochem. Bd. 61, 1997, Heft 7, Seiten 1138-1141). Trans-Rubenamin wurde in Zanthoxylum-Arten gefunden (Phytochemistry Bd. 28, 1989, S. 839ff.).

In der Literatur wird die Verwendung als Aromastoffe, insbesondere die Verwendung als scharf und warm schmeckende Aromastoffe nicht beschrieben.

Überraschenderweise zeigen die erfindungsgemäßen Ferulasäureamide bei der sensorischen Untersuchung einen angenehmen scharfen und warmen Geschmackseindruck, der neutral ist und relativ lang anhält.

Selbstverständlich können die verschiedenen erfindungsgemäßen Ferulasäureamide, deren Stereoisomere und Salze jeweils alleine oder als Gemische erfindungsgemäß verwendet werden.

Die Salze der erfindungsgemäßen Ferulasäureamide können als ein- oder gegebenenfalls mehrwertige phenolatische Salze mit anorganischen Kationen vorliegen. Bevorzugt sind die Kationen von Lithium, Natrium, Kalium, das Ammoniumion, die Kationen von Magnesium, Calcium und Strontium oder die Kationen von Aluminium, Zink, Kupfer, Eisen oder Mangan.

In einer besonders bevorzugten Ausführung der Erfindung werden die erfindungsgemäßen Ferulasäureamide in Kombination mit anderen scharf und/oder warm schmeckenden Substanzen oder auch scharf schmeckenden pflanzlichen Extrakten verwendet. Auf diese Weise kann ein besonders abgerundetes sensorisches Profil erreicht werden. Insbesondere die Kombination eines oder mehrerer der erfindungsgemäßen Ferulasäureamide mit einem Pfeffer-, Wasserpfeffer-, Chili-, Paradieskörner- oder Ingwerextrakt im Gewichtsverhältnis 0,01 zu 1 bis 100 zu 1, bevorzugt 0,1 zu 1 bis 10 zu 1 erzeugt ein angenehmes sensorisches Profil.

Andere scharf und/oder warm schmeckende Substanzen können z.B. sein Capsaicin, Dihydrocapsaicin, Gingerol, Paradol, Shogaol, Piperin, Carbonsäure-N-vanillylamide, insbesondere Nonansäure-N-vanillylamid, 2-Alkensäureamide, insbesondere 2-Nonensäure-N-isobutylamid, Pellitorin oder Spilanthol, 2-Nonensäure-N-4-hydroxy-3-methoxyphenylamid, Alkylether von 4-Hydroxy-3-methoxybenzylalkohol, insbesonders 4-Hydroxy-3-methoxybenzyl-n-butylether, Alkylether von 3-Hydroxy-4-methoxybenzylalkohol, Alkylether von 3,4-Dimethoxybenzylalkohol, Alkylether von 3-Ethoxy-4-hydroxybenzylalkohol, Alkylether von 3,4-Methylendioxybenzylalkohol, Nicotinaldehyd, Methylnicotinat, Propylnicotinat, 2-Butoxyethylnicotinat, Benzylnicotinat, 1-Acetoxychavicol, Polygodial oder Isodrimeninol.

Scharf schmeckende pflanzliche Extrakte können alle für die Ernährung geeigneten pflanzlichen Extrakte sein, die einen scharfen oder warmen sensorischen Eindruck hervorrufen. Bevorzugt als scharf schmeckende pflanzliche Extrakte sind beispielsweise Pfefferextrakt *(Piper ssp*., insbesondere *Piper nigrum),* Wasserpfefferextrakt *(Polygonum ssp.,* insbesondere *Polygonum hydropiper*), Extrakte aus *Allium ssp*. (insbesondere Zwiebel und Knoblauchextrakte), Extrakte aus Rettich *(Raphanus ssp*.), Meerrettichextrakte *(Cochlearia armoracia*), Extrakte aus schwarzem *(Brassica nigra*), wildem oder gelbem Senf *(Sinapis ssp.,* insbesondere *Sinapis arvensis* und *Sinapis alba*), Bertramwurzel-Extrakte *(Anacyclus ssp.,* insbesondere *Anacyclus pyrethrum* L.), Sonnenhutextrakte *(Echinaceae ssp.),* Extrakten aus Szechuan-Pfeffer *(Zanthoxylum ssp.,* insbesondere *Zanthoxylum piperitum),* Spilanthesextrakt *(Spilanthes ssp.,* insbesondere *Spilanthes acmella*), Chiliextrakt *(Capsicum ssp.,* insbesondere *Capsicum frutescens),* ParadieskömerExtrakt *(Aframomum ssp.,* insbesondere *Aframomum melegueta* [Rose] K. Schum.), Ingwerextrakt *(Zingiber ssp*., insbesondere *Zingiber officinale*) und Galangaextrakt *(Kaempferia galanga* oder *Alpinia galanga*).

Die scharf schmeckenden pflanzlichen Extrakte können aus den entsprechenden frischen oder getrockneten Pflanzen oder Pflanzenteilen, insbesondere aber aus weißen, grünen oder schwarzen Pfefferkörnern, Wasserpfefferkörnern, Zwiebeln und Knoblauch, Rettichwurzel, Meerrettich, Senfkörnern, Sonnenhutwurzeln, Bertramwurzel, Pflanzenteilen der *Zanthoxylum-*Arten*,* Pflanzenteilen der Spilanthes-Arten, Chilischoten, Paradieskörnern oder Ingwer- oder Galangawurzeln gewonnen werden, dergestalt, dass man die getrockneten Pflanzenteile, vorzugsweise vorher zerkleinert, mit einem für Nahrungs- und Genussmittel geeigneten Lösungsmittel, vorzugsweise aber Ethanol, Wasser, Hexan oder Heptan oder Ethanol/Wasser-Gemischen, bei 0°C bis zum Siedepunkt des jeweiligen Lösungsmittels oder Gemisches extrahiert, anschließend filtriert und das Filtrat ganz oder teilweise einengt, vorzugsweise durch Destillation oder Sprühtrocknung. Der so erhaltene Rohextrakt kann dann noch weiter aufgearbeitet werden, beispielsweise mit Wasserdampf bei Drücken von 0,01 mbar bis Normaldruck behandelt und/oder in einem für Nahrungs- und Genussmittel geigneten Lösungsmittel aufgenommen werden.

Ein für Nahrungs- und Genussmittel geeignetes Lösungsmittel kann beispielsweise sein: Wasser, Ethanol, Methanol, Propylenglycol, Glycerin, Aceton, Dichlormethan, Diethylether, Hexan, Heptan oder superkritisches Kohlendioxid oder Gemische der vorgenannten Lösungsmittel.

Als besonders vorteilhaft hat sich auch erwiesen, dass die erfindungsgemäßen Ferulasäureamide, insbesondere die erfindungsgemäßen Ferulasäureamide in Kombination mit scharf schmeckenden pflanzlichen Extrakten, den scharfen Geschmack von Alkohol in alkoholischen Getränken oder Zubereitungen aus alkoholischen Getränken imitieren können und es damit möglich ist, den Alkoholgehalt in alkoholischen Getränken oder in Zubereitungen aus alkoholischen Getränken bei gleichbleibender sensorischer Beurteilung niedriger einzustellen.

Weiterer Gegenstand der Erfindung sind der Ernährung, der Mundhygiene oder dem Genuss dienende Zubereitungen, enthaltend *N*-[2-(4-Hydroxy-3-methoxyphenyl)-ethyl]-3-(4-hydroxy-3-methoxy-phenyl)-(2*E*)-propensäureamid, *N*-[2-(4-Hydroxy-3-methoxyphenyl)ethyl]-3-(4-hydroxy-3-methoxy-phenyl)-(2*Z*)-propensäureamid, *N-*[2-(4-Hydroxy-3-methoxyphenyl)ethyl]-3-(4-hydroxy-3-methoxy-phenyl)-propansäureamid, *N*-[2-(3,4-Dihydroxyphenyl)ethyl]-3-(4-hydroxy-3-methoxy-phenyl)-(2*E*)-propensäureamid, *N*-[2-(3,4-Dihydroxyphenyl)ethyl]-3-(4-hydroxy-3-methoxyphenyl)-(2*Z*)-propensäureamid, *N*-[2-(4-Hydroxyphenyl)ethyl]-3-(3,4-dihydroxyphenyl)-(2*E*)-propensäureamid, *N*-[2-(4-Hydroxyphenyl)ethyl]-3-(3,4-dihydroxyphenyl)-(2*Z*)-propensäureamid, *N*-[2-(3,4-Dimethoxyphenyl)ethyl]-3-(3,4-dimethoxyphenyl)-(2*E*)-propensäureamid und/oder *N*-[2-(3,4-dimethoxyphenyl)-ethyl]-3-(3,4-dimethoxy-phenyl)-(2*Z*)-propensäureamid.

Die erfindungsgemäßen der Ernährung oder dem Genuss dienenden Zubereitungen enthalten die Ferulasäureamide in einer wirksamen Menge und gegebenenfalls andere Bestandteile. Sie enthalten in der Regel 0,000001 Gew.-% bis 10 Gew.-%, bevorzugt 0,0001 bis 1 Gew.-%, insbesondere aber 0,0001 Gew.-% bis 0,1 Gew.-%, bezogen auf das Gesamtgewicht der Zubereitung, an den Ferulasäureamiden sowie Gemischen derselben. Weitere übliche Grund-, Hilfs- und Zusatzstoffe für Nahrungs- oder Genussmittel können in Mengen von 5 bis 99,999999 Gew.-%, vorzugsweise 10 bis 80 Gew.-%, bezogen auf das Gesamtgewicht der Zubereitung, enthalten sein. Ferner können die Zubereitungen Wasser in einer Menge bis zu 99,999999 Gew.-%, vorzugsweise 5 bis 80 Gew.-%, bezogen auf das Gesamtgewicht der Zubereitung, aufweisen.

Die der Ernährung oder dem Genuss dienenden Zubereitungen im Sinne der Erfindung sind z.B. Backwaren (z.B. Brot, Trockenkekse, Kuchen, sonstiges Gebäck), Süßwaren (z.B. Schokoladen, Pralinen, Konfekt, Hart- und Weichkaramellen, Kaugummi), alkoholische oder nicht-alkoholische Getränke (z.B. Kaffee, Tee, Wein, weinhaltige Getränke, Bier, bierhaltige Getränke, Liköre, Schnäpse, Weinbrände, fruchthaltige Limonaden, isotonische Getränke, Erfrischungsgetränke, Nektare, Obst- und Gemüsesäfte, Frucht- oder Gemüsesaftzubereitungen), Instantgetränke, Fleischprodukte (z.B. Schinken, Frischwurst- oder Rohwurstzubereitungen), Eier oder Eiprodukte (Trockenei, Eiweiß, Eigelb), Getreideprodukte (z.B. Frühstückscerealien, Müsliriegel), Milchprodukte (z.B. Milchgetränke, Milcheis, Joghurt, Kefir, Frischkäse, Weichkäse, Hartkäse, Trockenmilchpulver, Butter, Buttermilch, Molke), Fruchtzubereitungen (z.B. Konfitüren, Marmeladen, Fruchteis, Fruchtsoßen), Gemüsezubereitungen (z.B. Ketchup, Soßen, Trockengemüse), Knabberartikel (z.B. gebackene oder frittierte Kartoffelchips oder Kartoffelteigprodukte, Extrudate auf Mais- oder Erdnussbasis), Produkte auf Fett- und Ölbasis oder Emulsionen derselben (z.B. Mayonnaise, Remoulade, Dressings), Fertiggerichte und Suppen, Gewürze, Würzmischungen sowie insbesondere Aufstreuwürzungen (Seasonings), die im Snackbereich Anwendung finden. Die Zubereitungen im Sinne der Erfindung können auch als Halbfertigware zur Herstellung weiterer der Ernährung oder dem Genuss dienenden Zubereitungen dienen. Die Zubereitungen im Sinne der Erfindung können auch in Form von Kapseln, Tabletten (nichtüberzogene sowie überzogene Tabletten, z.B. magensaftresistente Überzüge), Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen als Nahrungsergänzungsmittel vorliegen.

Eine weitere bevorzugte Ausführung der Erfindung sind der Mundhygiene dienende Zubereitungen, insbesondere Zahnpflegemittel wie Zahnpasten, Zahngele, Zahnpulver, Mundwässer, Kaugummis und andere Mundpflegemittel, enthaltend die Ferulasäureamide in einer wirksamen Menge und gegebenenfalls andere übliche Grund-, Hilfs- und Zusatzstoffe für solche Zubereitungen. Sie enthalten in der Regel 0,000001 Gew.-% bis 10 Gew.-%, bevorzugt 0,0001 bis 1 Gew.-%, insbesondere aber 0,0001 Gew.-% bis 0,1 Gew.-%, bezogen auf das Gesamtgewicht der Zubereitung, an den Ferulasäureamiden sowie Gemischen derselben. Weitere übliche Grund-, Hilfs- und Zusatzstoffe für die der Mundhygiene dienenden Zubereitungen können in Mengen von 0,000001 bis 99,999999 Gew.-%, vorzugsweise 10 bis 80 Gew.-%, bezogen auf das Gesamtgewicht der Zubereitung, enthalten sein. Ferner können die Zubereitungen Wasser in einer Menge bis zu 99,999999 Gew.-%, vorzugsweise 5 bis 80 Gew.-%, bezogen auf das Gesamtgewicht der Zubereitung, aufweisen.

Zahnpflegemittel, enthaltend die erfindungsgemäßen Ferulasäureamide, bestehen im allgemeinen aus einem abrasiven System (Schleif- oder Poliermittel), wie z.B. Kieselsäuren, Calciumcarbonaten, Calciumphosphaten, Alumiuniumoxiden und/oder Hydroxylapatiten, aus oberflächenaktiven Substanzen, wie z.B. Natriumlaurylsulfat, Natriumlaurylsarcosinat und/oder Cocamidopropylbetain, aus Feuchthaltemitteln, wie z.B. Glycerin und/oder Sorbit, aus Verdickungsmitteln, wie z.B. Carboxymethylcellulose, Polyethylenglycolen, Carrageenanen und/oder Laponiten®, aus Süßstoffen, wie z.B. Saccharin, aus Stabilisatoren und aus aktiven Wirkstoffen, wie z.B. Natriumfluorid, Natriummonofluorphosphat, Zinndifluorid, quartären Ammoniumfluoriden, Zinkcitrat, Zinksulfat, Zinnpyrophosphat, Zinndichlorid, Mischungen verschiedener Pyrophosphate, Triclosan, Cetylpyridiniumchlorid, Aluminiumlactat, Kaliumcitrat, Kaliumnitrat, Kaliumchlorid, Strontiumchlorid, Wasserstoffperoxid, Aromen und/oder Natriumbicarbonat.

Kaugummis, enthaltend die erfindungsgemäßen Ferulasäureamide, bestehen im allgemeinen aus einer Kaugummibase, d.h. einer beim Kauen plastische werdenden Kaumasse, aus Zuckern verschiedener Arten, Zuckeraustauschstoffen, Süßstoffen, Zuckeralkoholen, Feuchthaltemitteln, Verdickern, Emulgatoren, Stabilisatoren und Aromen.

Die erfindungsgemäßen Zubereitungen, enthaltend die erfindungsgemäßen Ferulasäureamide können dergestalt hergestellt werden, dass die erfindungsgemäßen Ferulasäureamide als Substanz, als Lösung oder in Form eines Gemisches mit einem festen oder flüssigen Trägerstoff in die der Ernährung oder dem Genuss dienenden Zubereitungen eingearbeitet werden.

Zur Herstellung der Zubereitungen können in einer weiteren bevorzugten Ausführungsform die erfindungsgemäßen Ferulasäureamide und gegebenenfalls andere Bestandteile der erfindungsgemäßen Zubereitung auch vorher in Emulsionen, in Liposomen, z.B. ausgehend von Phosphatidylcholin, in Microsphären, in Nanosphären oder auch in Kapseln aus einer für Lebens- und Genussmittel geeigneten Matrix, z.B. aus Stärke, Stärkederivaten, anderen Polysacchariden, natürlichen Fetten, natürlichen Wachsen oder aus Proteinen, z.B. Gelatine, eingearbeitet werden. Eine weitere Ausführungsform besteht darin, dass die erfindungsgemäßen Ferulasäureamide vorher mit geeigneten Komplexbildnern, beispielsweise mit Cyclodextrinen oder Cyclodextrinderivaten, bevorzugt β-Cyclodextrin, komplexiert werden und in dieser Form eingesetzt werden.

Als weitere Bestandteile für die erfindungsgemäßen, der Ernährung oder dem Genuss dienenden Zubereitungen können übliche Grund-, Hilfs- und Zusatzstoffe für Nahrungs- oder Genussmittel verwendet werden, z.B. Wasser, Gemische frischer oder prozessierter, pflanzlicher oder tierischer Grund- oder Rohstoffe (z.B. rohes, gebratenes, getrocknetes, fermentiertes, geräuchertes und/oder gekochtes Fleisch, Ei, Knochen, Knorpel, Fisch, Gemüse, Früchte, Kräuter, Nüsse, Gemüse- oder Fruchtsäfte oder -pasten oder deren Gemische), verdauliche oder nicht verdauliche Kohlenhydrate (z.B. Saccharose, Maltose, Fructose, Glucose, Dextrine, Amylose, Amylopektin, Inulin, Xylane, Cellulose), Zuckeralkohole (z.B. Sorbit), natürliche oder gehärtete Fette (z.B. Talg, Schmalz, Palmfett, Kokosfett, gehärtetes Pflanzenfett), Öle (z.B. Sonnenblumenöl, Erdnussöl, Maiskeimöl, Olivenöl, Distelöl, Fischöl, Sojaöl, Sesamöl), Fettsäuren oder deren Salze (z.B. Kaliumstearat), proteinogene oder nicht-proteinogene Aminosäuren und verwandte Verbindungen (z.B. Taurin, Kreatin, Kreatinin), Peptide, native oder prozessierte Proteine (z.B. Gelatine), Enzyme (z.B. Peptidasen, Glycosidasen, Lipasen), Nukleinsäuren, Nucleotide, geschmacksmodulierende Stoffe (z.B. Natriumglutamat, 2-Phenoxypropionsäure, Hydroxyflavanone), Emulgatoren (z.B. Lecithine, Diacylglycerole), Stabilisatoren (z.B. Carageenan, Alginat), Konservierungsstoffe (z.B. Benzoesäure, Sorbinsäure), Antioxidantien (z.B. Tocopherol, Ascorbinsäure), Chelatoren (z.B. Citronensäure), organische oder anorganische Säuerungsmittel (z.B. Äpfelsäure, Essigsäure, Citronensäure, Weinsäure, Phosphorsäure), zusätzliche Bitterstoffe (z.B. Chinin, Coffein, Limonin), Süßstoffe (z.B. Saccharin, Cyclamat, Aspartam, Neotam, Neohesperidindihydrochalcon, Sucralose), mineralische Salze (z.B. Natriumchlorid, Kaliumchlorid, Magnesiumchlorid, Natriumphosphate), die enzymatische Bräunung verhindernde Stoffe (z.B. Sulfit, Ascorbinsäure), etherische Öle, Pflanzenextrakte, natürliche oder synthetische Farbstoffe oder Farbpigmente (z.B. Carotinoide, Flavonoide, Anthocyane, Chlorophyll und deren Derivate), Gewürze, sowie Riechstoffe, synthetische, natürliche oder naturidentische Aroma- und Geschmackstoffe.

Bevorzugt können die erfindungsgemäßen Zubereitungen auch noch eine Aromakomposition enthalten, um den Geschmack und/oder Geruch der Zubereitung abzurunden und zu verfeinern. Geeignete Aromakompositionen enthalten z.B. synthetische, natürliche oder naturidentische Aromastoffe sowie Riechstoffe, insbesondere aber auch andere scharf oder warm schmeckende Substanzen.

Ein weiterer Gegenstand der Erfindung ist die Verwendung der erfindungsgemäßen Zubereitungen als Halbfertigwaren zur Aromatisierung von daraus gefertigten Zubereitungen als Fertigwaren.

Ein weiterer Gegenstand der Erfindung ist die Verwendung der erfindungsgemäßen Zubereitungen als Riech-, Aroma- oder Geschmacksstoffkomposition oder als Würzmischung.

### Beispiele

### Beispiel 1

### Verkostung der Scharfstoffe trans-Feruloylmethoxytyramin, cis-Feruloylmethoxytyramin, trans-Caffeoyltyramin, trans-Rubenamin und Piperin

Die zu verkostende Substanz wird in Ethanol gelöst und die ethanolische Lösung dann mit 11 Gew.-%iger Zuckerlösung verdünnt (Endkonzentration: c). Zur Verkostung werden jeweils ca. 5 ml der Zuckerlösung heruntergeschluckt. Wenn der Schwellenwert der Substanz bekannt ist, wird für die Verkostung ein Wert knapp über dem Schwellenwert gewählt. Eine Gruppe von 8 Prüfern hat die Lösungen verkostet.

Profil trans-Feruloylmethoxytyramin:
c = 10 ppm: Fülle, süss, verzögert einsetzende Wärmeentwicklung, langanhaltend, vor allem im Rachenraum (bei 4 Teilnehmern), haftfest, leicht betäubende Wirkung
c = 20 ppm: süss, anisig, Benzaldehyd, verzögert einsetzende Wärmeentwicklung (bei 8 Teilnehmern), langanhaltend, vor allem im Rachenraum, angenehme Pfefferschärfe

Profil cis-Feruloylmethoxytyramin:
c = 1 ppm: Schärfe baut sich langsam auf.

Profil trans-Caffeoyltyramin:
c = 1 ppm: verzögert eintretende Schärfewirkung, anästhesierende Schärfe.

Profil trans-Rubenamin:
c = 1 ppm: angenehme leichte Schärfe, baut sich langsam auf.

### Vergleichsversuch

Profil Piperin:
c = 500 ppb: sehr verzögert einsetzende, schwache Wärmeentwicklung (bei 6 Teilnehmern), verzögert einsetzende neutrale Schärfe (bei 6 Teilnehmern)
c = 20 ppm: sehr verzögert einsetzende schwache Wärmeentwicklung (bei 8 Teilnehmern), stechend, brennend, langanhaltend, Pfefferkorn, im ganzen Mundbereich (bei 8 Teilnehmern)

### Beispiel 2

### Einsatz von trans-Feruloylmethoxytyramin in Likörgetränken als sensorischer Alkoholersatz

Der im folgenden verwendete Paradieskörnerextrakt würde hergestellt, indem 800 g gemahlene Paradieskörner mit 4 kg Ethanol (96 Vol.-%) gerührt wurden. Nach Filtration wurde das Filtrat auf 40 g eingeengt und mit Wasserdampf bei 100°C und 300 mbar behandelt. Der Extrakt wurde auf 80 g mit Ethanol (96 Vol.-%) aufgefüllt.

Als marktübliche Modellsysteme wurden eine Likörbase 10 Vol.-% und eine Likörbase 5,5 Vol.-% ausgewählt. Die Zusammensetzung ist in den Tabellen 1 und 2 dargestellt.

**Tabelle 1: Modellsystem A; Likörbase 10 Vol.-%**

| | Einsatz in Gew.-% |
|---|---|
| Ethanol abs., Lebensmittelqualität | 7,39% |
| Invertzuckersirup 66,5% (Trockensubstanz) | 20,00% |
| Leitungswasser | 72,61 % |
| Summe | 100,00% |

**Tabelle 2: Modellsystem B; Likörbase 5,5 Vol.-%**

| | Einsatz in Gew.-% |
|---|---|
| Ethanol abs., Lebensmittelqualität | 4,06% |
| Invertzuckersirup 66,5% (Trockensubstanz) | 20,00% |
| Leitungswasser | 75,94% |
| Summe | 100,00% |

Dem Modellsystem A wurde nun die Lösung des Paradieskörnerextraktes (1 Gew.-% in Ethanol (EtOH)) in Konzentrationen von 1 bis 3 Gew.-%, bezogen auf das Gesamtgewicht des Modellsystems, sowie eine Lösung von trans-Feruloylmethoxytyramin (1 Gew.-% in Ethanol) in der Konzentration von 1 Gew.-%, bezogen auf das Gesamtgewicht des Modellsystems, zugesetzt. Mit einer Verkostungsgruppe von 8 Personen wurde zunächst der Einfluß von Paradieskörnerextrakt-Zusatz und von trans-Feruloylmethoxytyramin-Zusatz auf das sensorische Profil überprüft. Die sensorische Bewertung erfolgte auf einer Skala von 1 (schwach) bis 5 (stark). Das Ergebnis zeigt Tabelle 3.

**Tabelle 3: Sensorische Bewertung der Schärfe einer Likörbase bei Zusatz von Paradieskörnerextrakt und trans-Feruloylmethoxytyramin**

| **Zusatz zu Modellsystem A** | **Schärfe (Median), Bewertung 1-5** | **sensorische Beschreibung** |
|---|---|---|
| 1 Gew.-% Paradieskörnerextrakt -Lösung (1 Gew.-% in EtOH) | 1,5 | schwacher Effekt, leichte Vanillenote, leicht scharf |
| 2 Gew.-% Paradieskörnerextrakt-Lösung (1 Gew.-% in EtOH) | 3,25 | leicht erkennbar, gut, richtiger Effekt, zu scharf, süß, Vanille, unangenehmer Nachgeschmack, sehr kräftig |
| 3 Gew.-% Paradieskörnerextrakt-Lösung (1 Gew.-% in EtOH) | 5 | zu scharf, zu stark, brennender, beißender Nachgeschmack (Ingwer), sehr haftfest |
| 1 Gew.-% trans-Feruloylmethoxytyramin-Lösung (1 Gew.-% in EtOH) | 2 | süß, Vanille, fruchtig, wenig bitter, richtiger Effekt, leichte Schärfe im Impact, nach 10 sec. kräftige Schärfe, angenehm, wenig Nachschärfe, wenig haftend |

Im Anschluss wurde nun Modellsystem A die Lösung eines Paradieskörnerextrakts (10 Gew.-% in Ethanol) in Konzentrationen von 0,1 bis 0,2 Gew.-%, bezogen auf das Gesamtgewicht des Modellsystems, sowie eine Lösung des trans-Feruloylmethoxytyramins (10 Gew.-% in Ethanol) in der Konzentration von 0,01 bis 0,02 Gew.-%, bezogen auf das Gesamtgewicht des Modellsystems, zugesetzt. Mit einer Verkostungsgruppe von 8 Personen wurde wiederum der Einfluss von Paradieskömerextrakt-Zusatz und von trans-Feruloylmethoxytyramin-Zusatz auf das sensorische Profil überprüft. Zusätzlich wurde die Kombinationswirkung überprüft. Das Ergebnis zeigt Tabelle 4.

**Tabelle 4: Überprüfung der Kombinationswirkung von Paradieskörnerextrakt und trans-Feruloylmethoxytyramin.**

| **Zusatz zu Modellsystem A** | **Kommentar** |
|---|---|
| 0,015 Gew.-% Paradieskörnerextrakt-Lösung (10 Gew.-% in EtOH) | kräftig, guter Effekt, scharf alkoholische Schärfe |
| 0,02 Gew.-% trans-Feruloylmethoxytyramin-Lösung (10 Gew.-% EtOH) | mild, Schärfe sehr ähnlich der alkoholischen Schärfe |
| 0,01 Gew.- % Paradieskörnerextrakt-Lösung (10 Gew.-% in EtOH) und 0,01 Gew.% trans-Feruloylmethoxytyramin-Lösung (10 Gew.-% in EtOH) | sehr mild, leichte Schärfe |
| 0,01 Gew.- % Paradieskörnerextrakt-Lösung (10 Gew.-% in EtOH) und 0,02 Gew.-% trans-Feruloylmethoxytyramin-Lösung (10 Gew.-% in EtOH) | Profil ähnlich der alkoholischen Schärfe, sehr mild |
| 0,015 Gew.- % Paradieskörnerextrakt-Lösung (10 Gew.-% in EtOH) und 0,015 Gew.-% trans-Feruloylmethoxytyramin-Lösung (10 Gew.-% in EtOH) | Deutliche Schärfe, stark, ähnlich der alkoholischen Schärfe |

Nachdem die Einzel- und insbesondere die Kombinationsprüfung eindeutig den Effekt von alkoholischer Schärfe zeigte, wurde ein direkter Vergleich von Modellsystem A mit einer Alkoholstärke von 10 Vol.-% und Modellsystem B mit 5,5 Vol.-% vorgenommen. Das Modellsystem B wurde mit einer Paradieskörnerextrakt-Lösung (10 Gew.-% in EtOH) und der trans-Feruloylmethoxytyramin-Lösung (10 Gew.-% in EtOH) bis zu den angegebenen Konzentrationen versetzt. Das Ergebnis der Vergleichsprüfung zeigt Tabelle 5.

**Tabelle 5: Vergleichsprüfung von Modellsystem A ohne Zusatz und Modellsystem B mit kombiniertem Zusatz von Paradieskörnerextrakt und trans-Feruloylmethoxytyramin.**

| **Zusatz in Modellsystem B** | **sensorischer Vergleich von Modellsystem B zu Modellsystem A (ohne Zusatz)** |
|---|---|
| 0,3 Gew.-% Paradieskörnerextrakt-Lösung (10 Gew.-% in EtOH) | kräftig, guter Effekt, scharf alkoholische Schärfe, zu stark gegenüber Modellsystem A |
| 0,2 Gew.-% Paradieskörnerextrakt-Lösung (10 Gew.-% in EtOH) | ausgewogen, Schärfe sehr ähnlich der alkoholischen Schärfe in Modellsystem A |
| 0,2 Gew.-% Paradieskörnerextrakt-Lösung (10 Gew.-% in EtOH) und 0,2 Gew.-% trans-Feruloylmethoxytyramin (10 Gew.-% in EtOH) | Schärfe, Zeit-Intensitätsverhalten ähnlich der alkoholischer Schärfe in Modellsystem A |
| 0,075 Gew.-% Paradieskörnerextrakt-Lösung (10 Gew.-% in EtOH) und 0,025 Gew.-% trans-Feruloylmethoxytyramin (10 Gew.-% in EtOH) | Profil ähnlich der alkoholischen Schärfe, authentisches Zeit-Intensitätsprofil gegenüber der alkoholischer Schärfe von Modellsystem A |

Mit diesem Anwendungsbeispiel konnte gezeigt werden, dass durch bestimmte Kombinationen von trans-Feruloylmethoyxtyramin mit scharf schmeckenden Pflanzenextrakten, hier im Beispiel Paradieskömerextrakt, die alkoholische Schärfe nachgeahmt werden kann.

### Beispiel 3

Einsatz von trans-Feruloylmethoxytyramin in Geleefrüchten als Aromaverstärker

Als marktübliches Modellsystem wurden Aromenkombinationen in Geleefrüchten mit Holunderbeeraroma angewendet:

**Tabelle 6: Geleefrüchte mit Holunderbeeraroma 0,07 Gew.-%, bezogen auf das Gesamtgewicht der Zubereitung**

| **Zusatz trans-Feruloylmethoxytyramin-Lösung (1 Gcw.-% in Ethanol)** | **sensorische Beschreibung** |
|---|---|
| 0,015 Gew.-% | Effekt nur schwach wahrnehmbar |
| 0,03 Gew.-% | Effekt unterschwellig, aber angenehm |
| 0,045 Gew.-% | Aroma frisch und abgerundet |

### Beispiel 4

Anwendung in einem Apfelschnaps als Alkoholverstärker

| Probe A: | |
|---|---|
| 20l | Alkohol 96 Vol.-% |
| 5,2l | Aroma (Natürliches Apfel-Fruchtsaft-Likör-Aroma, 15 % Vol.) |
| 27 kg | Zuckersirup |
| 1 kg | Citronensäure-Monohydrat |
| Auffüllen mit Wasser, demineralisiert auf 100 l | |
| Gesamtmenge 100 l | |

| Probe B: | |
|---|---|
| 14,90 l | Alkohol 96 Vol.-% |
| 5,2 1 | Aroma (Natürliches Apfel-Fruchtsaft-Likör-Aroma, 15 % Vol., enthält 0,01 Gew.% trans-Feruloylmethoxytyramin) |
| 27 kg | Zuckersirup |
| 1 kg | Citronensäure-Monohydrat |
| Auffüllen mit Wasser, demineralisiert auf 100 l | |
| Gesamtmenge 100 l | |

Sensorische Bewertung Probe A: mittlere alkoholische Schärfe
Sensorische Bewertung Probe B: mittlere alkoholische Schärfe, weitere Schärfe erkennbar

### Beispiel 5:

Anwendung in einer Zahnpasta als Aromastoff

| **Teil** | **Inhaltsstoff** | **Einsatz in Gew.-%** |
|---|---|---|
| A | demineralisiertes Wasser | 22,00 |
| | Sorbitol (70%) | 45,00 |
| | Solbrol® M, Natriumsalz (Bayer AG, p-Hydroxybenzoesäurealkylester) | 0,15 |
| | Trinatriumphosphat | 0,10 |
| | Saccharin, 450 fach | 0,20 |
| | Natriummonofluorphosphat | 1,12 |
| | Polyethylenglycol 1500 | 5,00 |
| B | Sident 9 (abrasives Siliciumdioxid) | 10,00 |
| | Sident 22 S (verdickendes Siliciumdioxid) | 8,00 |
| | Natriumcarboxymethylcellulose | 0,90 |
| | Titandioxid | 0,50 |
| C | demineralisertes Wasser | 4,53 |
| | Natriumlaurylsulfat | 1,50 |
| D | Aroma, enthaltend 0,1 % trans-Feruloylmethoxytyramin | 1 |

Die Inhaltsstoffe der Teile A und B werden jeweils für sich vorgemischt und zusammen unter Vakuum bei 25 - 30°C 30 min gut verrührt. Teil C wird vorgemischt und zu A und B gegeben; D wird hinzugefügt und die Mischung unter Vakuum bei 25 - 30°C 30 min gut verrührt. Nach Entspannung ist die Zahnpasta fertig und kann abgefüllt werden.

### Beispiel 6:

Anwendung in einem zuckerfreien Kaugummi als Aromastoff

| **Teil** | **Inhaltsstoff** | **Einsatz in Gew.-%** |
|---|---|---|
| A | Kaugummibase, Company "Jagum T" | 30,00 |
| B | Sorbit, pulverisiert | 39,00 |
| | Isomalt® (Palatinit GmbH) | 9,50 |
| | Xylit | 2,00 |
| | Mannit | 3,00 |
| | Aspartam® | 0,10 |
| | Acesulfam® K | 0,10 |
| | Emulgum® (Colloides Naturels, Inc.) | 0,30 |
| C | Sorbitol, 70% | 14,00 |
| | Glycerin | 1,00 |
| D | Aroma, enthaltend 0,1 % trans-Feruloylmethoxytyramin | 1 |

Teile A bis D werden gemischt und intensiv geknetet. Die Rohmasse kann z.B. in Form von dünnen Streifen zu verzehrsfertigen Kaugummis verarbeitet werden.

### Beispiel 7:

Anwendung in einem Mundwasser als Aromastoff

| **Teil** | **Inhaltsstoff** | **Einsatz in Gew. -%** |
|---|---|---|
| A | Ethanol | 10,00 |
| | Cremophor® CO 40 (BASF, Detergenz) | 1,00 |
| | Benzoesäure | 0,12 |
| | Aroma, enthaltend 0,4 % trans-Feruloylmethoxytyramin | 0,25 |
| B | demineralisiertes Wasser | 83,46 |
| | Sorbitol, 70% | 5,00 |
| | Natriumsaccharin 450 | 0,07 |
| | L-Blue 5000 e.c., 1% in Wasser (Farbstoff) | 0,10 |

Die Inhaltsstoffe der Teile A und B werden jeweils für sich gemischt. Teil B wird langsam in Teil A eingerührt, bis die Mischung homogen ist.

## Patentansprüche

1. Verwendung von *N*-[2-(4-Hydroxy-3-methoxyphenyl)ethyl]-3-(4-hydroxy-3-methoxy-phenyl)-(2*E*)-propensäureamid, *N*-[2-(4-Hydroxy-3-methoxyphenyl)ethyl]-3-(4-hydroxy-3-methoxy-phenyl)-(2*Z*)-propensäureamid, *N*-[2-(4-Hydroxy-3-methoxyphenyl)ethyl]-3-(4-hydroxy-3-methoxy-phenyl)-propansäureamid, *N*-[2-(3,4-Dihydroxyphenyl)ethyl]-3-(4-hydroxy-3-methoxy-phenyl)-(2*E*)-propensäureamid, *N*-[2-(3,4-Dihydroxyphenyl)ethyl]-3-(4-hydroxy-3-methoxy-phenyl)-(2*Z*)-propensäureamid, *N*-[2-(4-Hydroxyphenyl)ethyl]-3-(3,4-dihydroxyphenyl)-(2*E*)-propensäureamid, *N*-[2-(4-Hydroxyphenyl)-ethyl]-3-(3,4-dihydroxyphenyl)-(2*Z*)-propensäureamid, *N*-[2-(3,4-Dimethoxyphenyl)ethyl]-3-(3,4-dimethoxyphenyl)-(2*E*)-propensäureamid und *N*-[2-(3,4-dimethoxyphenyl)ethyl]-3-(3,4-dimethoxy-phenyl)-(2*Z*)-propensäureamid sowie deren Gemische als Aromastoffe.

2. Verwendung nach Anspruch 1, wobei Aromastoff Scharfstoff oder Aromastoff mit einem wärmeerzeugenden Effekt bedeutet.

3. Verwendung nach Ansprüchen 1 und 2 in der Ernährung, der Mundhygiene oder dem Genuss dienenden Zubereitungen.

4. Der Ernährung, der Mundhygiene oder dem Genuss dienende Zubereitungen, enthaltend *N*-[2-(4-Hydroxy-3-methoxyphenyl)ethyl]-3-(4-hydroxy-3-methoxy-phenyl)-(2*E*)-propensäureamid, *N*-[2-(4-Hydroxy-3-methoxyphenyl)ethyl]-3-(4-hydroxy-3-methoxy-phenyl)-(2*Z*)-propensäureamid, *N*-[2-(4-Hydroxy-3-methoxyphenyl)ethyl]-3-(4-hydroxy-3-methoxy-phenyl)-propansäureamid, *N*-[2-(3,4-Dihydroxyphenyl)ethyl]-3-(4-hydroxy-3-methoxy-phenyl)-(2*E*)-propensäureamid, *N*-[2-(3,4-Dihydroxyphenyl)ethyl]-3-(4-hydroxy-3-methoxy-phenyl)-(2*Z*)-propensäureamid, *N*-[2-(4-Hydroxyphenyl)ethyl]-3-(3,4-dihydroxyphenyl)-(2*E*)-propensäureamid, *N*-[2-(4-Hydroxyphenyl)ethyl]-3-(3,4-dihydroxyphenyl)-(2*Z*)-propensäureamid, *N*-[2-(3,4-Dimethoxyphenyl)ethyl]-3-(3,4-dimethoxyphenyl)-(2*E*)-propensäureamid und/oder *N*-[2-(3,4-dimethoxyphenyl)ethyl]-3-(3,4-dimethoxy-phenyl)-(2*Z*)-propensäureamid.

5. Zubereitungen nach Anspruch 4, enthaltend mindestens eine weitere scharf oder warm schmeckende Substanz.

6. Zubereitungen nach Anspruch 4, enthaltend zusätzlich mindestens einen scharf schmeckenden pflanzlichen Extrakt.

7. Zubereitungen nach Anspruch 4, enthaltend enthaltend mindestens eine weitere scharf oder warm schmeckende Substanz und zusätzlich mindestens einen scharf schmeckenden pflanzlichen Extrakt.

8. Als Halbfertigwaren vorliegende Zubereitungen nach den Ansprüchen 4 bis 7.

9. Verwendung der Zubereitungen nach den Ansprüchen 4 bis 8 zur Imitation des scharfen Geschmackeindrucks von Alkohol in Alkohol-reduzierten alkoholischen Getränken oder Zubereitungen aus alkoholischen Getränken.

10. Verwendung der Zubereitungen nach den Ansprüchen 4 bis 8 als Riech-, Aroma- oder Geschmacksstoffkomposition oder als Würzmischung.

## Claims

1. Use of *N*-[2-(4-hydroxy-3-methoxyphenyl)ethyl]-3-(4-hydroxy-3-methoxyphenyl)-(2*E*)-propenamide, *N*-[2-(4-hydroxy-3-methoxyphenyl)ethyl]-3-(4-hydroxy-3-methoxyphenyl)-(2*Z*)-propenamide, *N*-[2-(4-hydroxy-3-methoxyphenyl)ethyl]-3-(4-hydroxy-3-methoxyphenyl)-propanamide, *N*-[2-(3,4-dihydroxyphenyl)ethyl]-3-(4-hydroxy-3-methoxyphenyl)-(2*E*)-propenamide, *N*-[2-(3,4-dihydroxyphenyl)ethyl]-3-(4-hydroxy-3-methoxyphenyl)-(2*Z*)-propenamide, *N*-[2-(4-hydroxyphenyl)ethyl]-3-(3,4-dihydroxyphenyl)-(2*E*)-propenamide, *N*-[2-(4-hydroxyphenyl)ethyl]-3-(3,4-dihydroxyphenyl)-(2*Z*)-propenamide, *N*-[2-(3,4-dimethoxyphenyl)ethyl]-3-(3,4-dimethoxyphenyl)-(2*E*)-propenamide and *N*-[2-(3,4-dimethoxyphenyl)ethyl]-3-(3,4-dimethoxyphenyl)-(2*Z*)-propenamide and mixtures thereof as aroma substances.

2. Use according to claim 1, wherein aroma substance means a pungent substance or an aroma substance with a heat-generating effect.

3. Use according to claim 1 and claim 2 in preparations for nutrition, oral hygiene or which are consumed for pleasure.

4. Preparations for nutrition, oral hygiene or which are consumed for pleasure containing *N*-[2-(4-hydroxy-3-methoxyphenyl)ethyl]-3-(4-hydroxy-3-methoxyphenyl)-(2*E*)-propenamide, *N*-[2-(4-hydroxy-3-methoxyphenyl)ethyl]-3-(4-hydroxy-3-methoxyphenyl)-(2*Z*)-propenamide, *N*-[2-(4-hydroxy-3-methoxyphenyl)ethyl]-3-(4-hydroxy-3-methoxyphenyl)-propanamide, *N*-[2-(3,4-dihydroxyphenyl)ethyl]-3-(4-hydroxy-3-methoxyphenyl)-(2*E*)-propenamide, *N*-[2-(3,4-dihydroxyphenyl)ethyl]-3-(4-hydroxy-3-methoxyphenyl)-(2*Z*)-propenamide, *N*-[2-(4-hydroxyphenyl)ethyl]-3-(3,4-dihydroxyphenyl)-(2*E*)-propenamide, *N*-[2-(4-hydroxyphenyl)ethyl]-3-(3,4-dihydroxyphenyl)-(2 *Z*)-propenamide, *N*-[2-(3,4-dimethoxyphenyl)ethyl]-3-(3,4-dimethoxyphenyl)-(2*E*)-propenamide and/or *N*-[2-(3,4-dimethoxyphenyl)ethyl]-3-(3,4-dimethoxyphenyl)-(2*Z*)-propenamide.

5. Preparations according to claim 4, containing at least one further pungent or hot-tasting substance.

6. Preparations according to claim 4, additionally containing at least one pungent-tasting plant extract.

7. Preparations according to claim 4, containing at least one further pungent or hot-tasting substance and additionally at least one pungent-tasting plant extract.

8. Preparations according to claims 4 to 7 assuming the form of semifinished products.

9. Use of the preparations according to claims 4 to 8 for imitating the pungent flavour impression of alcohol in alcohol-reduced alcoholic beverages or preparations of alcoholic beverages.

10. Use of the preparations according to claims 4 to 8 as a fragrance, aroma or flavouring substance composition or as a seasoning mixture.

## Revendications

1. Utilisation de N-[2-(4-hydroxy-3-méthoxyphényl)éthyl]-3-(4-hydroxy-3-méthoxyphényl)-(2E)-propénamide, de N-[2-(4-hydroxy-3-méthoxyphényl)éthyl]-3-(4-hydroxy-3-méthoxyphényl)-(2*Z*)-propénamide, de N-[2-(4-hydroxy-3-méthoxyphényl)éthyl]-3-(4-hydroxy-3-méthoxyphényl)propanamide, de N-[2-(3,4-dihydroxyphényl)éthyl]-3-(4-hydroxy-3-méthoxyphényl)-(2E)-propénamide, de N-[2-(3,4-dihydroxyphényl)éthyl]-3-(4-hydroxy-3-méthoxyphényl)-(2Z)-propénamide, de N-[2-(4-hydroxyphényl)éthyl]-3-(3,4-dihydroxyphényl)-(2E)-propénamide, de N-[2-(4-hydroxyphényl)-éthyl]-3-(3,4-dihydroxyphényl)-(2Z)-propénamide, de N-[2-(3,4-diméthoxyphényl)éthyl]-3-(3,4-diméthoxyphényl)-(2E)-propénamide et de N-[2-(3,4-diméthoxyphényl)éthyl]-3-(3,4-diméthoxyphényl)-(2Z)-propénamide et de leurs mélanges comme substances aromatisantes.

2. Utilisation selon la revendication 1, dans laquelle la substance aromatisante désigne une substance relevée ou une substance aromatisante ayant un effet producteur de chaleur.

3. Utilisation selon les revendications 1 et 2 dans des préparations servant à l'alimentation, à l'hygiène buccale ou à la consommation.

4. Préparations servant à l'alimentation, à l'hygiène buccale ou à la consommation, contenant du N-[2-(4-hydroxy-3-méthoxyphényl)éthyl]-3-(4-hydroxy-3-méthoxyphényl)-(2E)-propénamide, du N-[2-(4-hydroxy-3-méthoxyphényl)éthyl]-3-(4-hydroxy-3-méthoxyphényl)-(2Z)-propénamide, du N-[2-(4-hydroxy-3-méthoxyphényl)éthyl]-3-(4-hydroxy-3-méthoxyphényl)propanamide, du N-[2-(3,4-dihydroxyphényl)éthyl]-3-(4-hydroxy-3-méthoxyphényl)-(2E)-propénamide, du N-[2-(3,4-dihydroxyphényl)éthyl]-3-(4-hydroxy-3-méthoxyphényl)-(2Z)-propénamide, du N-[2-(4-hydroxyphényl)éthyl]-3-(3,4-dihydroxyphényl)-(2E)-propénamide, du N-[2-(4-hydroxyphényl)éthyl]-3-(3,4-dihydroxyphényl)-(2Z)-propénamide, du N-[2-(3,4-diméthoxyphényl)éthyl]-3-(3,4-diméthoxyphényl)-(2E)-propénamide et/ou du N-[2-(3,4-diméthoxyphényl)éthyl]-3-(3,4-diméthoxyphényl)-(2Z)-propénamide.

5. Préparations selon la revendication 4, contenant au moins une autre substance au goût relevé ou chaud.

6. Préparations selon la revendication 4, contenant en outre au moins un extrait de plante au goût relevé.

7. Préparations selon la revendication 4, contenant au moins une autre substance au goût relevé ou chaud et en outre au moins un extrait de plante au goût relevé.

8. Préparations selon les revendications 4 à 7 se présentant sous forme de produits semi-finis.

9. Utilisation des préparations selon les revendications 4 à 8 pour imiter l'impression de goût relevé de l'alcool dans des boissons alcooliques à teneur réduite en alcool ou dans des préparations provenant de boissons alcooliques.

10. Utilisation des préparations selon les revendications 4 à 8 comme composition de parfum, d'arôme ou d'agent de sapidité ou comme mélange d'assaisonnement.
